# EUROPÄISCHE PATENTSCHRIFT

(11) **EP 4 211 517 B1**
(45) Veröffentlichungstag und Bekanntmachung des Hinweises auf die Patenterteilung: **30.07.2025**
(21) Anmeldenummer: 21759304.5
(22) Anmeldetag: 16.08.2021
(51) Int. Cl.: G05B 19/042

(54) **FELDGERÄT DER AUTOMATISIERUNGSTECHNIK ZUM EINSATZ IN EINEM EXPLOSIONSGEFÄHRDETEN BEREICH**
AUTOMATION FIELD DEVICE FOR USE IN A POTENTIALLY EXPLOSIVE AREA
DISPOSITIF DE TERRAIN POUR AUTOMATISATION À UTILISER DANS UNE ZONE POTENTIELLEMENT EXPLOSIVE

(30) Priorität: 08.09.2020 DE 102020123407
(43) Veröffentlichungstag der Anmeldung: 19.07.2023
(73) Patentinhaber: Endress+Hauser SE+Co. KG, 79689 Maulburg (DE)
(72) Erfinder: STRÜTT, Bernd, 79585 Steinen (DE); STRITTMATTER, Christian, 79736 Rickenbach (DE); GERWIG, Simon, 79650 Schopfheim (DE)
(74) Vertreter: Endress + Hauser Group Services (Deutschland) AG+Co. KG
(86) Internationale Anmeldenummer: PCT/EP2021/072673
(87) Internationale Veröffentlichungsnummer: WO 2022/053262

(56) Entgegenhaltungen:
- DE-A1- 102008 060 359
- GB-A- 2 578 931

## Beschreibung

Die Erfindung bezieht sich auf ein Feldgerät der Automatisierungstechnik zum Einsatz in einem explosionsgefährdeten Bereich.

In der Automatisierungstechnik, insbesondere in der Prozessautomatisierungstechnik werden vielfach Feldgeräte eingesetzt, die zur Erfassung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, usw., welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevanten Informationen liefern oder verarbeiten. Im Zusammenhang mit der Erfindung werden unter Feldgeräten also insbesondere auch Remote I/Os, Funkadapter bzw. allgemein Geräte verstanden, die auf der Feldebene angeordnet sind.

Eine Vielzahl solcher Feldgeräte wird von der Firma Endress + Hauser hergestellt und vertrieben.

Viele Feldgeräte sind als sogenannte 2-Leiter Versionen erhältlich. Hierbei erfolgt die Energieversorgung des Feldgeräts über das gleiche Leitungspaar (Zweileiterdraht) über das auch die Kommunikation erfolgt.

Insbesondere in der Prozessindustrie aber auch der Automatisierungstechnik müssen physikalische oder technische Größen durch die Feldgeräte oftmals in Bereichen gemessen bzw. ermittelt werden, in denen potentiell Explosionsgefahr besteht, sogenannte explosionsgefährdete Bereiche. Durch geeignete Maßnahmen in den Feldgeräten und Auswertesystemen (wie z. B. Spannungs- und Strombegrenzung) kann die elektrische Energie in dem zu übermittelnden Signal so begrenzt werden, dass dieses Signal unter keinen Umständen (Kurzschluss, Unterbrechungen, thermische Effekte, ...) eine Explosion auslösen kann. Hierfür sind in der IEC EN DIN 60079-ff entsprechende Schutzprinzipien festgelegt worden.

Gemäß dieser Norm sind basierend auf den anzuwendenden Zündschutzarten konstruktive und schaltungstechnische Maßnahmen für die Feldgeräte zur Verwendung in explosionsgefährdeten Bereichen definiert. Einer dieser Zündschutzarten stellen die Zündschutzart "Eigensicherheit" (Kennzeichnung Ex-i, IEC EN DIN 60079-11, veröffentlich Juni 2012) dar.

Die Zündschutzart "Eigensicherheit" basiert auf dem Prinzip der Strom- und Spannungsbegrenzung in einem Stromkreis. Die Energie des Stromkreises, die in der Lage sein könnte, eine explosionsfähige Atmosphäre zum Zünden zu bringen, wird dabei so begrenzt, dass weder durch Funken noch durch unzulässige Erwärmung der elektrischen Bauteile die Zündung der umgebenden explosionsfähigen Atmosphäre stattfinden kann.

Ein kritischer Bereich, in dem eine mögliche Zündung der umgebenden explosionsfähige Atmosphäre auftreten kann, sind die Anschlussklemmen eines Feldgerätes an denen die Zweidrahtleitung angeschlossen wird.

Für gewöhnlich wird deshalb ein Kurzschlussstrom, welcher an den Anschlussklemmen wirken kann, mithilfe einer Ex-Schutzeinheit begrenzt. Die aus dem Stand der Technik bekannten Ex-Schutzeinheiten umfassen meistens zumindest zwei, in der Regel jedoch drei in Reihe geschaltete Dioden, die zur Entkopplung von großen Kapazitäten (C > 100 nF) dienen. Dies hat allerdings den Nachteil, dass die Dioden bereits bei kleinen Strömen einen Spannungsabfall erzeugen, welche wiederum zur Folge haben, dass einer internen Feldgeräteelektronik eine kleinere Spannung und somit weniger Leistung zur Verfügung steht.

Dies kann an einem einfachen Beispiel dargestellt werden. Geht man nun von einem 4-20mA Feldgerät aus, welches im Fehlerzustand ≤ 3,6mA Strom zur Verfügung hat und mit einer Versorgungsspannung von 10,6V noch betrieben werden soll, hat man eine Energie von 38,16mW an den Anschlussklemmen. Hat man nun drei Dioden in Reihe und geht man von einer relativ kleinen Flussspannung der Dioden mit 150mV aus, hat man dennoch an jeder Diode einen Verlust von 0,54mW. Dies entspricht bei drei in Reihe geschalten Dioden einer Verlustleistung von 1,62mW. Dies bedeutet, man würde 4,25% (= 1,62mW / (3,6mA*10,6V) = 1,62mW / 38,16mW) der zur Verfügung stehenden Energie an den Dioden verlieren.

Der Erfindung liegt somit die Aufgabe zugrunde ein Feldgerät mit einer Ex-Schutzeinheit vorzuschlagen, welche eine geringere Verlustleistung aufweist.

Aus der DE 10 2008 060359 A1 ist ein Feldgerät der Automatisierungstechnik zum Einsatz in einem explosionsgefährdeten Bereich bekannt, das als Lösung einer ähnlichen Aufgabe eine Kaskadierung von drei Schaltzellen, die jeweils einen Transistor und einen Basiswiderstand aufweisen, vorschlägt.

Aus der GB 2 578 931 A ist bekannt, dass durch die Kombination einer Diode mit einem Widerstand sich die Vorwärtsspannung einer Referenzspannungsquelle einstellen lässt.

Die Aufgabe wird erfindungsgemäß gelöst durch das Feldgerät der Automatisierungstechnik gemäß Patentanspruch 1.

Das erfindungsgemäße Feldgerät der Automatisierungstechnik zum Einsatz in einem explosionsgefährdeten Bereich umfasst:
- zwei Anschlussklemmen zum Anschließen einer Zweidrahtleitung über die eine Strom zuführbar ist;
- ein Sensor- und/oder Aktorelement zum Erfassen und/oder Stellen einer Prozessgröße;
- eine mit den Anschlussklemmen verbundene Feldgeräteelektronik, der der über die Zweidrahtleitung zuführbare Strom zugeführt wird und die dazu eingerichtet ist, anhand des zugeführten Stromes eine Energieversorgung für das Feldgerät bereitzustellen und ferner die über das Sensorelement erfasste Prozessgröße und/oder eine durch das Aktorelement zu stellende Prozessgröße über die Zweidrahtleitung zu übertragen bzw. zu empfangen;
- eine Ex-Schutzeinheit als Teil der Feldgeräteelektronik, die in einen Strompfad zwischen den zwei Anschlussklemmen eingebracht ist, um einen möglichen Kurzschlusstrom zu begrenzen und die wenigsten zwei Dioden in Reihe und zumindest einen zu den wenigsten zwei Dioden parallelgeschalten Widerstand aufweist.

Eine vorteilhafte Ausgestaltung des erfindungsgemäßen Feldgerätes sieht vor, dass die wenigsten zwei Dioden und der zumindest eine Widerstand derartig aufeinander abgestimmt sind, dass unterhalb eines Wendepunkts einer nach der Ex-Schutzeinheit bereitgestellten Ausgangsspannung (Uout) eine Verlustleistung im Wesentlichen durch den zumindest einen Widerstand und oberhalb des Wendepunkts die Verlustleistung im Wesentliche durch die wenigstens zwei Dioden bestimmt ist, wobei der Wendepunkt insbesondere im Bereich von 0,1-6 Volt, vorzugsweise im Bereich von 0,2-4 Volt, besonders bevorzugt im Bereich von 0,3-2,5 Volt liegt.

Eine vorteilhafte Ausgestaltung des erfindungsgemäßen Feldgerätes sieht vor**,** dass die die wenigsten zwei Dioden und der zumindest eine Widerstand ferner derartig aufeinander abgestimmt sind, dass eine Verlustleistung unterhalb des Wendepunktes geringer ist als eine Verlustleistung oberhalb des Wendepunktes.

Eine vorteilhafte Ausgestaltung des erfindungsgemäßen Feldgerätes sieht vor, dass der zumindest ein Widerstand einen Widerstandswert in Bereich von 10-100 Ohm, vorzugsweise 15-60 Ohm, besonders bevorzugt von 30-35 Ohm, ganz besonders bevorzugt ca. 33 Ohm aufweist.

Eine vorteilhafte Ausgestaltung des erfindungsgemäßen Feldgerätes sieht vor, dass die wenigstens zwei Dioden jeweils eine Flussspannung von 0,3 V aufweisen.

Die Erfindung wird anhand der nachfolgenden Zeichnungen näher erläutert. Es zeigt:
Fig. 1: eine schematische Darstellung eines Feldgerätes, welches über eine Zweidrahtleitung zur Signal- und Energieübertragung an eine übergeordnete Einheit angeschlossen ist,
Fig. 2: die Ex-Schutzeinheit im Detail, und
Fig. 3a - 3c: Schaltungssimulationen der Ex-Schutzeinheit.

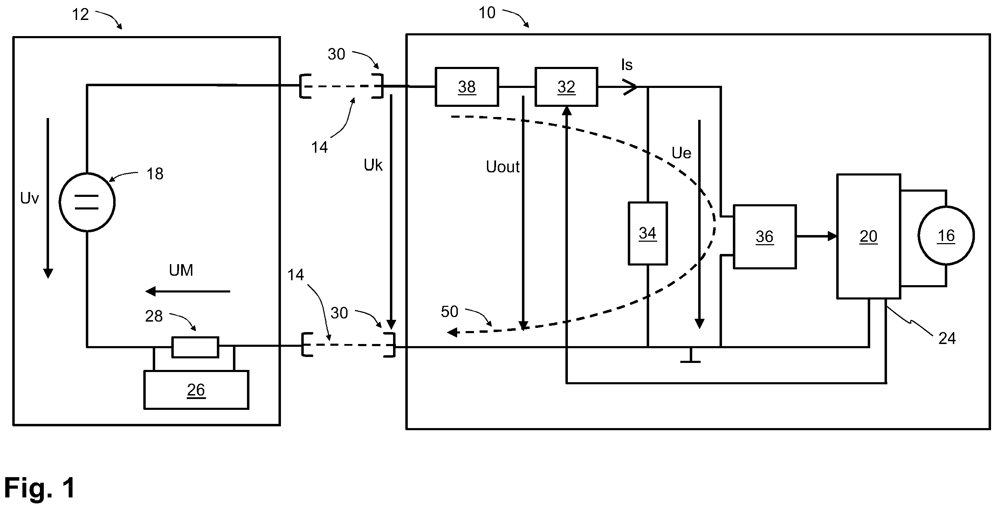

Figur 1 zeigt eine schematische Darstellung eines Feldgerätes 10, welches über eine Zweidrahtleitung 14 zur Signal- und Energieübertragung an eine übergeordnete Einheit 12 angeschlossen ist. Das Feldgerät 10 ist bei dem dargestellten Beispiel eine Messstelle, in der mit Hilfe eines Sensors 16 ein Messwert bzw. Prozessgröße (beispielsweise Temperatur, Druck, Feuchtigkeit, Füllstand, Durchfluss) erfasst wird. Genauso gut könnte das Feldgerät aber auch eine Aktorstelle sein, in der mit Hilfe eines Aktors eine Prozessgröße gestellt wird.

Das Feldgerät 10 enthält keine eigene Energiequelle, sondern bezieht den für ihren Betrieb erforderlichen Versorgungsstrom über die Zweidrahtleitung 14. Dieser kann beispielsweise von einer in der übergeordneten Einheit 12 enthaltenen Spannungsquelle 18 bereitgestellt werden. Über die gleiche Zweidrahtleitung 14 wird ein jeweils den gerade gemessenen Messwert darstellendes Messwertsignal von dem Feldgerät 10 zur übergeordneten Einheit 12 übertragen. Einer üblichen Technik entsprechend ist das Messwertsignal ein über die Zweidrahtleitung 14 fließender Signalstrom IS der sich zwischen zwei vorgegebenen Werten (üblicherweise den Stromwerten 4 mA und 20 mA) ändern kann. Die Spannungsquelle 18 liefert eine Gleichspannung Uv, und der Messstrom Is ist ein Gleichstrom.

Zur Messwerterfassung enthält das Feldgerät 10 den bereits erwähnten Sensor 16 und eine mit ihm verbundene Messwandlerschaltung 20, die an einem Ausgängen 22 den erfassten Messwert repräsentierende Signale abgibt.

Die übergeordnete Einheit 12 enthält eine Auswertungsschaltung 26, die aus dem über die Zweidrahtleitung 14 übertragenen Signalstrom Is die Messwertinformation gewinnt. Zu diesem Zweck ist in die Zweidrahtleitung ein Messwiderstand 28 eingefügt, an dem eine Spannung UM entsteht, die dem über die Zweidrahtleitung übertragenen Signalstrom Is proportional ist und die der Auswertungsschaltung 26 zugeführt wird.

Der Signalstrom Is wird in dem Feldgerät 10 durch eine steuerbare Stromregelung bzw. Stromsenke 32 eingestellt, der das von der Messwandlerschaltung 20 am Ausgang 24 abgegebene Signal als Steuersignal für den festzulegenden Signalstrom Is zugeführt wird. Abhängig vom jeweils erfassten Messwert wird somit der in der Zweidrahtleitung fließende Signalstrom Is durch eine entsprechende Steuerung der Stromregelung bzw. Stromsenke 32 gestellt. Die Stromregelung bzw. Stromsenke kann beispielsweise einen Transistor umfassen, der über das Steuersignal von der Messwandlerschaltung 20 angesteuert wird.

Wie aus Fig. 1 hervorgeht, enthält das Feldgerät 10 ferner eine Spannungsquelle 34 und einen Spannungsregler 36, bspw. in Form eines Schalt- oder Linearreglers, dessen Aufgabe darin besteht, eine möglichst konstante Betriebsspannung für die Messwandlerschaltung 20 und den Sensor 16 zu erzeugen. Die Eingangsspannung für den Spannungsregler 36 wird von der Spannungsquelle 34 geliefert. Die Spannungsquelle 34 kann beispielsweise ein Kondensator sein. Die Verwendung des Spannungsreglers 36 in Verbindung mit der Spannungsquelle 34 ermöglicht es, der Messwandlerschaltung 20 und dem Sensor 16 stets die höchstmögliche Leistung zur Verfügung zu stellen. Der Spannungsregler 36 sorgt dabei dafür, dass trotz einer Erhöhung seiner Eingangsspannung Ue die Betriebsspannung der Messwandlerschaltung 20 und des Sensors 16 auf einem konstanten Wert gehalten wird, so dass durch eine Erhöhung der Eingangsspannung Ue am Spannungsregler 36 eine höhere Eingangsleistung zur Verfügung steht, die somit auch eine höhere Ausgangsleistung ermöglicht.

Bei einem vom Sensor 16 erfassten Messwert, der am unteren Ende des Messwertbereichs liegt, nimmt der Signalstrom Is ebenfalls den unteren Wert des Signalstrombereichs an. Bei der üblichen 4-20 mA Technik also einen Wert von 4 mA. Entsprechend nimmt bei einem vom Sensor 16 erfassten Messwert, der am oberen Ende des Messwertbereichs liegt, der Signalstrom Is den oberen Wert des Signalstrombereichs an. Bei der üblichen 4-20 mA Technik also einen Wert von 20 mA.

Ferner umfasst das Feldgerät 10 eine Ex-Schutzeinheit 38, welche zwischen der der steuerbaren Stromquelle und einer der Anschlussklemme 30 in den Strompfad von Is angeordnet ist. In Fig. 1 ist die Ex-Schutzeinheit 38 zwischen der oberen Anschlussklemme 30 und der steuerbaren Stromregelung bzw. Stromsenke 32 angeordnet. Genauso gut kann die Ex-Schutzeinheit 38 aber auch in dem Feldgerät hinter der unteren Anschlussklemme angeordnet sein.

Durch die Ex-Schutzeinheit 38 kann das Feldgerät 10 in den eingangs erwähnten explosionsgefährdeten Bereichen eingesetzt werden, da der Kurzschlussstrom durch die Ex-Schutzeinheit auf einen unkritischen Wert reduziert wird.

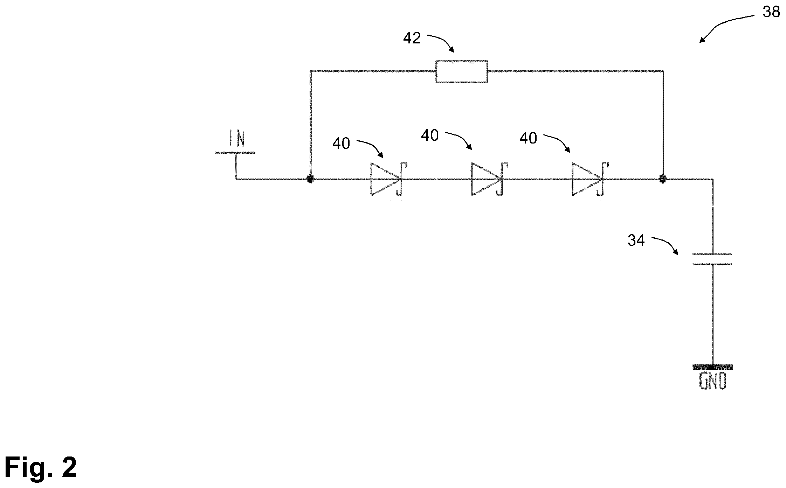

Fig. 2 zeigt eine erfindungsgemäß ausgebildete Ex-Schutzeinheit 38. Diese umfasst drei in Reihe zueinander geschaltete Dioden 40 sowie einen Widerstand 42 der parallel zu der Reihenschaltung der Dioden angeordnet bzw. geschaltet ist. Durch die Kombination von der Reihenschaltung der Dioden 40 und des dazu parallel geschalteten Widerstands 42 lässt sich die Verlustleistung reduzieren. Dies soll an dem nachfolgenden Beispiel erläutert werden. Exemplarisch sei angenommen, dass der Widerstand einen Wert von 33 Ohm aufweist. In diesem Fall hätte man, wenn man im eingangs erwähnten Beispiel bleibt (Is = 3,6 mA und Uk = 10,6V) einen Spannungsabfall über dem Widerstand von 118,8 mV und somit eine Verlustleistung von 0,427 mW. Dies würde bedeuten man hätte die Verlustleistung um 74% reduziert. Um nun ein überproportionales Ansteigen der Verlustleistung aufgrund der Stromabhängigkeit des Widerstandes, d.h. bei steigendem Strom steigt auch dessen Spannungsabfall, zu verhindern, sind die drei Dioden parallel zu dem Widerstand 42 geschaltet. Ohne die parallelgeschalteten Dioden 40 hätte man bei einem maximalen Strom Is von 22mA und einem Widerstand mit 33 Ohm eine Verlustleistung von 15,972 mW. Um diese Verluste nicht in Kauf zu nehmen, bleibt die Reihenschaltung der drei Dioden 40 weiterhin in der Schaltung vorhanden. Diese hätte in diesem Zustand eine Verlustleistung von 9,9mW.

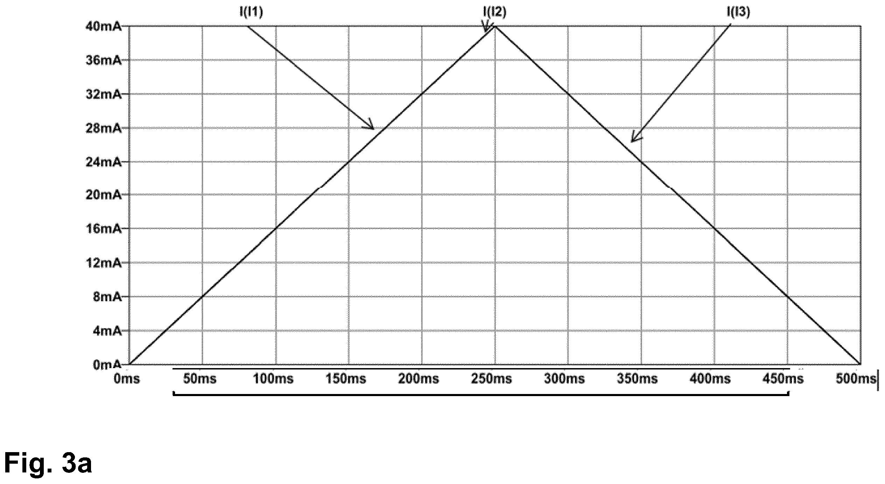

Zur Verdeutlichung ist in den Fig. 3a - 3c eine Schaltungssimulation für die Ex-Schutzeinheit 38 dargestellt. Simuliert wurde dabei die Spannung, der Strom und die Verlustleistung über der Ex-Schutzeinheit gegenüber der Zeit. Hierbei wurde die Ex-Schutzeinheit 38, einmal mit einem Widerstand allein (d.h. ohne die parallel geschalteten Dioden), einmal mit den drei in Reihe geschalteten Dioden allein (d.h. ohne den parallel geschalteten Widerstand) und einmal die erfindungsgemäße Kombination aus den drei in Reihe geschalteten Dioden 40 und dem parallel dazu geschalteten Widerstand 42 als Begrenzungsmaßnahme simuliert. Fig. 3a zeigt dabei lediglich den Strom Is gegenüber der Zeit, mit der die entsprechende Schaltung simuliert wurde.

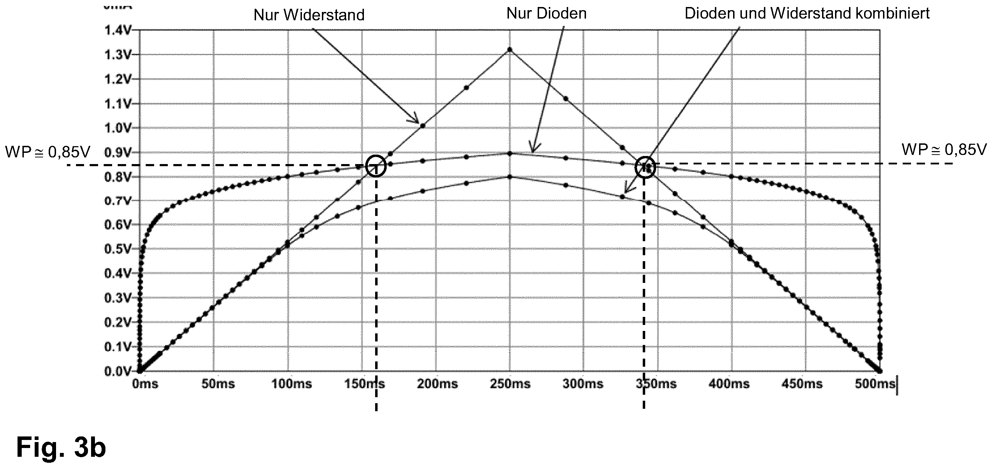

Durch die Schaltungssimulation wird aus Fig. 3b ersichtlich, dass bei der Begrenzungsmaßnahme durch die in Reihe geschalteten Dioden alleine ein Spannungsabfall über der Ex-Schutzeinheit bis zu einem Wendepunkt bei ca. 0,85V größer ist als bei einer Begrenzungsmaßnahme durch den Widerstand alleine.

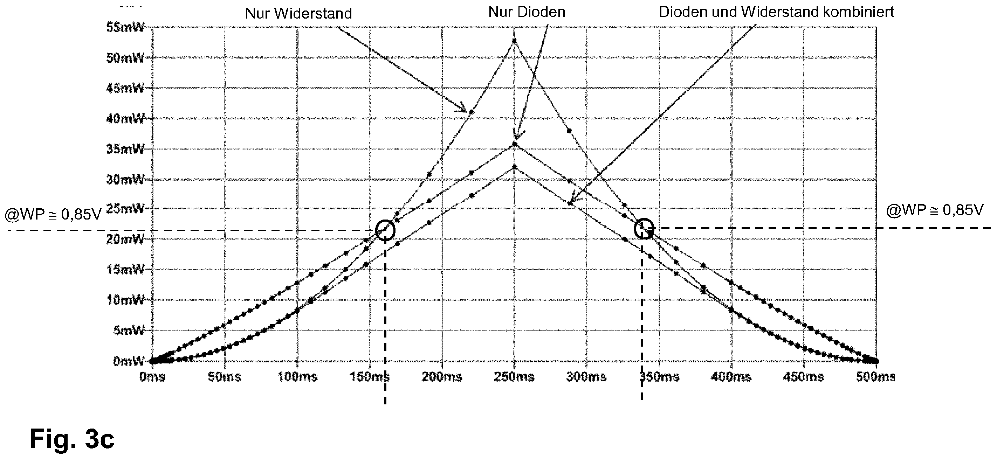

Nach dem Wendepunkt bei ca. 0,85 V ändert sich das Verhalten und der Spannungsabfall über der Ex-Schutzeinheit, welche nur aus dem Widerstand besteht, wird größer gegenüber der Ex-Schutzeinheit, die aus den Dioden besteht. Das gleiche Verhalten zeigt sich dementsprechend auch für eine Verlustleistung der Ex-Schutzeinheit und ist in Fig. 3c dargestellt. Dies hat zur Folge, dass sich die am Ausgang der Ex-Schutzeinheit zur Verfügung stehende Leistung entsprechend verändert, d.h. bei einer Ex-Schutzeinheit, die nur aus Dioden besteht, steht im Vergleich zu einer rein aus dem Widerstand bestehenden Ex-Schutzeinheit bis zu dem Wendepunkt eine geringere Leistung und nach dem Wendepunkt eine größer Leistung am Ausgang der Ex-Schutzeinheit zur Verfügung.

In den Fig. 3a - 3c ist ferner das Ergebnis der Schaltungssimulation für eine erfindungsgemäß ausgestaltet Ex-Schutzeinheit aus einem Widerstand und drei dazu parallel geschalteten Dioden dargestellt. Aus der in Fig. 3c dargestellten Schaltungssimulation wird somit ersichtlich, dass aus der Kombination aus beiden Begrenzungsverfahren (Widerstand und dazu parallel geschaltete Dioden) die Maximale Ausgangsleistung über einen sehr großen Bereich von 0 - 40mA zur Verfügung steht.

### Bezugszeichenliste

- 10: Feldgerät
- 12: Übergeordnete Einheit, z.B. Steuerprogrammierbare Steuerung (SPS)
- 14: Zweidrahtleitung
- 16: Sensor
- 20: Messwandlerschaltung
- 24: Ausgang der Messwandlerschaltung
- 30: Anschlussklemmen
- 32: Steuerbare Stromregelung bzw. Stromsenke
- 34: Energiespeicherelement
- 36: Spannungsregler, bspw. Schaltregler oder Linearregler
- 38: Ex-Schutzeinheit
- 40: Dioden der Ex-Schutzeinheit
- 42: Widerstand der Ex-Schutzeinheit
- Ue: Spannung am Ausgang des Speicherelements
- Is: Messstrom
- Uk: Klemmenspannung
- WP: Wendepunkt

## Patentansprüche

1. Feldgerät der Automatisierungstechnik (10) zum Einsatz in einem explosionsgefährdeten Bereich aufweisend:
- zwei Anschlussklemmen (30) zum Anschließen einer Zweidrahtleitung (14) über die eine Strom zuführbar ist;
- ein Sensor- und/oder Aktorelement (16) zum Erfassen und/oder Stellen einer Prozessgröße;
- eine mit den Anschlussklemmen (30) verbundene Feldgeräteelektronik (32, 34, 36, 38), der der über die Zweidrahtleitung (14) zuführbare Strom (Is) zugeführt wird und die dazu eingerichtet ist, anhand des zugeführten Stromes (Is) eine Energieversorgung für das Feldgerät bereitzustellen und ferner die über das Sensorelement (16) erfasste Prozessgröße und/oder eine durch das Aktorelement (16) zu stellende Prozessgröße über die Zweidrahtleitung (14) zu übertragen bzw. zu empfangen;
- eine Ex-Schutzeinheit (38) als Teil der Feldgeräteelektronik, die in einen Strompfad (50) zwischen den zwei Anschlussklemmen (14) eingebracht ist, um einen möglichen Kurzschlusstrom zu begrenzen und die wenigsten zwei Dioden (40) in Reihe und zumindest einen zu den wenigsten zwei Dioden (40) parallelgeschalten Widerstand (42) aufweist.

2. Feldgerät der Automatisierungstechnik nach Anspruch 1, wobei die wenigsten zwei Dioden (40) und der zumindest eine Widerstand (42) derartig aufeinander abgestimmt sind, dass unterhalb eines Wendepunkts einer nach der Ex-Schutzeinheit bereitgestellten Ausgangsspannung (Uout) eine Verlustleistung im Wesentlichen durch den zumindest einen Widerstand und oberhalb des Wendepunkts die Verlustleistung im Wesentliche durch die wenigstens zwei Dioden (40) bestimmt ist, wobei der Wendepunkt insbesondere im Bereich von 0,1-6 Volt, vorzugsweise im Bereich von 0,2-4 Volt, besonders bevorzugt im Bereich von 0,3-2,1 Volt liegt.

3. Feldgerät der Automatisierungstechnik nach dem vorhergehenden Anspruch, wobei die wenigsten zwei Dioden (40) und der zumindest eine Widerstand (42) ferner derartig aufeinander abgestimmt sind, dass eine Verlustleistung unterhalb des Wendepunktes geringer ist als eine Verlustleistung oberhalb des Wendepunktes.

4. Feldgerät der Automatisierungstechnik nach einem oder mehreren der vorhergehenden Ansprüche, wobei der zumindest ein Widerstand (42) einen Widerstandswert in Bereich von 10-100 Ohm, vorzugsweise 15-60 Ohm, besonders bevorzugt von 30-35 Ohm, ganz besonders bevorzugt ca. 33 Ohm aufweist.

5. Feldgerät der Automatisierungstechnik nach einem oder mehreren der vorhergehenden Ansprüche, wobei die wenigstens zwei Dioden (40) jeweils eine Flussspannung von 0,3 V aufweisen.

## Claims

1. An automation technology field device (10) for use in a potentially explosive atmosphere, having:
- Two connection terminals (30) for connecting a two-wire cable (14) via which current can be supplied;
- A sensor and/or actuator element (16) for detecting and/or supplying a process variable;
- Field device electronics (32, 34, 36, 38) connected to the connection terminals (30) to which the current (Is) which can be supplied via the two-wire cable (14) is supplied and which are configured to provide a power supply for the field device using the supplied current (Is) and further to transmit and/or receive the process variable detected by the sensor element (16) and/or a process variable to be provided by the actuator element (16) via the two-wire cable (14);
- An Ex protection unit (38) as part of the field device electronics, which is integrated in a current path (50) between the two connection terminals (14), in order to limit a possible short-circuit current and which has at least two diodes (40) in series and at least one resistor (42) connected in parallel to the at least two diodes (40).

2. The automation technology field device as claimed in claim 1, wherein the at least two diodes (40) and the at least on resistor (42) are adapted to each other in such a way that a dissipated power below an inflection point of an output voltage (Uout) provided downstream of the Ex protection unit is mainly determined by the at least one resistor and that the dissipated power above the inflection point is mainly determined by the at least two diodes (40), wherein the inflection point is in particular in the range from 0.1-6 volts, preferably in the range from 0.2-4 volts, particularly preferably in the range from 0.3-2.1 volts.

3. The automation technology field device as claimed in the preceding claim, wherein the at least two diodes (40) and the at least one resistor (42) are further adapted to each other in such a way that a dissipated power below the inflection point is less than a dissipated power above the inflection point.

4. The automation technology field device as claimed in one or more of the preceding claims, wherein the at least one resistor (42) has a resistance value in the range from 10-100 ohm, preferably 15-60 ohm, particularly preferably 30-35 ohm, most particularly preferably approx. 33 ohm.

5. The automation technology field device as claimed in one or more of the preceding claims, wherein the at least two diodes (40) each have a forward voltage of 0.3 V.

## Revendications

1. Appareil de terrain de la technique d'automatisation (10), lequel appareil est destiné à être utilisé dans une zone explosible, lequel appareil présente :
- deux bornes de raccordement (30) pour le raccordement d'un câble 2 fils (14) par l'intermédiaire duquel un courant peut être amené ;
- un élément capteur et/ou un élément actionneur (16) destiné(s) à la mesure et/ou au réglage d'une grandeur de process ;
- une électronique d'appareil de terrain (32, 34, 36, 38) reliée aux bornes de raccordement (30), électronique à laquelle est amené le courant (Is) pouvant être amené par le câble 2 fils (14) et laquelle électronique est conçue pour mettre à disposition une alimentation en énergie pour l'appareil de terrain à l'aide du courant amené (Is) et, en outre, pour transmettre ou régler via le câble 2 fils (14) la grandeur de process mesurée par l'élément capteur (16) et/ou une grandeur de process à régler par l'élément actionneur (16) ;
- une unité de protection antidéflagrante (38) faisant partie de l'électronique de l'appareil de terrain, laquelle unité est insérée dans un trajet de courant (50) entre les deux bornes de raccordement (14) afin de limiter un éventuel courant de court-circuit et laquelle unité comporte au moins deux diodes (40) en série et au moins une résistance (42) montée en parallèle avec les au moins deux diodes (40).

2. Appareil de terrain de la technique d'automatisation selon la revendication 1, pour lequel les au moins deux diodes (40) et l'au moins une résistance (42) sont accordées entre elles de telle sorte qu'en dessous d'un point d'inflexion d'une tension de sortie (Uout) fournie par l'unité de protection antidéflagrante, une puissance dissipée est essentiellement déterminée par l'au moins une résistance et qu'au-dessus du point d'inflexion, la puissance dissipée est essentiellement déterminée par les au moins deux diodes (40), le point d'inflexion se situant notamment dans la gamme de 0,1 à 6 volts, de préférence dans la gamme de 0,2 à 4 volts, de manière particulièrement préférée dans la gamme de 0,3 à 2,1 volts.

3. Appareil de terrain de la technique d'automatisation selon la revendication précédente, pour lequel les au moins deux diodes (40) et l'au moins une résistance (42) sont en outre accordées entre elles de telle sorte qu'une puissance dissipée au-dessous du point d'inflexion est inférieure à une puissance dissipée au-dessus du point d'inflexion.

4. Appareil de terrain de la technique d'automatisation selon une ou plusieurs des revendications précédentes, pour lequel l'au moins une résistance (42) présente une valeur de résistance dans la gamme de 10 à 100 ohms, de préférence de 15 à 60 ohms, de manière particulièrement préférée de 30 à 35 ohms, de manière tout à fait préférée d'environ 33 ohms.

5. Appareil de terrain de la technique d'automatisation selon une ou plusieurs des revendications précédentes, pour lequel les au moins deux diodes (40) présentent chacune une tension de seuil de 0,3 V.
